# EUROPÄISCHE PATENTSCHRIFT

(11) **EP 3 165 909 B1**
(45) Veröffentlichungstag und Bekanntmachung des Hinweises auf die Patenterteilung: **06.06.2018**
(21) Anmeldenummer: 16195733.7
(22) Anmeldetag: 26.10.2016
(51) Int. Cl.: G01N 21/94, G01N 21/95, B08B 9/46, G01N 21/90, G01N 21/84, B65G 43/08, B07C 5/342, B08B 9/08

(54) **INSPEKTIONSVORRICHTUNG ZUR OPTISCHEN KONTROLLE VON LEERGUTKÄSTEN**
INSPECTION APPARATUS FOR THE OPTICAL CONTROL OF CRATES.
APPAREIL D'INSPECTION POUR LE CONTROLE OPTIQUE DE CAISSES.

(30) Priorität: 04.11.2015 DE 202015105854 U
(43) Veröffentlichungstag der Anmeldung: 10.05.2017
(73) Patentinhaber: Krones AG, 93073 Neutraubling (DE)
(72) Erfinder: Niedermeier, Anton, 93073 Neutraubling (DE)
(74) Vertreter: Grünecker Patent- und Rechtsanwälte PartG mbB

(56) Entgegenhaltungen:
- EP-A2- 0 597 353
- EP-A2- 1 975 604
- DE-A1- 19 827 739
- DE-A1- 19 849 063
- US-A- 3 278 971

## Beschreibung

Die Erfindung betrifft eine Inspektionsvorrichtung zur optischen Kontrolle von Leergutkästen mit den Merkmalen des Oberbegriffs von Anspruch 1.

Leergutkästen weisen üblicherweise ein regelmäßiges Raster von Fächern auf, die durch von einer Bodenebene ausgehende Fächerwände gebildet werden. Die Leergutkästen dienen zur Aufnahme und zum Transport von Flaschen, beispielsweise von einem Getränkelieferanten zum Geschäft oder von dort zum Endabnehmer. Die leeren Flaschen werden anschließend wieder als Leergut in die Leergutkästen gestellt und zum Getränkelieferanten zur Widerverwertung zurücktransportiert. Dort werden die Leergutkästen üblicherweise in einer Waschstation gewaschen und anschließend auf Verschmutzungen und/oder Beschädigung hin optisch kontrolliert.

Zur optischen Kontrolle sind üblicherweise Inspektionsvorrichtungen bzw. -verfahren vorgesehen, wobei die Inspektionsvorrichtung wenigstens eine Kamera und eine Beleuchtungseinrichtung zur Kontrolle der Leergutkästen sowie eine Transporteinrichtung zum Transport der Leergutkästen zwischen der Beleuchtungseinrichtung und der Kamera umfasst. Üblicherweise ist dabei die Kamera mit ihrer Achse auf die Bodenebene des zu kontrollierenden Leergutkastens gerichtet sowie auf die dahinter liegende Lichtaustrittsfläche der Beleuchtungseinrichtung. Demnach werden die Leergutkästen im Durchlicht mit der Kamera erfasst, so dass sich beispielsweise eine Silhouette der Bodenebene und der Fächerwände im Kamerabild abbildet. Die Auswertung erfolgt anschließend mittels einer Bilderverarbeitungseinrichtung, beispielsweise über eine Erkennung von Verschmutzungen gegenüber Verstrebungen der Bodenebene.

Beispielsweise ist aus der EP 0597353 A2 ein Verfahren zur Kontrolle von Flaschenkästen und eine Vorrichtung zur Durchführung des Verfahrens bekannt.

Nachteilig dabei ist, dass vom Leergutkasten abfließende Verschmutzungen und/oder eine Reinigungsflüssigkeit die Inspektionsvorrichtung und damit die Kamera oder die Beleuchtungseinrichtung verschmutzt, so dass diese in regelmäßigen Abständen gereinigt werden muss. Zur Reinigung muss allerdings ein dementsprechender Aufwand betrieben werden, wozu gegebenenfalls auch Betriebsunterbrechungen notwendig sind, was entsprechend kostenintensiv ist.

Aufgabe der vorliegenden Erfindung ist es daher, eine Inspektionsvorrichtung zur optischen Kontrolle von Leergutkästen bereitzustellen, die im Betrieb weniger aufwändig bei der Reinigen und damit kostengünstiger sind.

Zur Lösung dieser Aufgabenstellung stellt die Erfindung eine Inspektionsvorrichtung zur optischen Kontrolle von Leergutkästen mit den Merkmalen des Anspruchs 1 bereit, vorteilhafte Ausbildungen der Erfindung sind in den Unteransprüchen genannt.

Die Inspektionsvorrichtung zeichnet sich erfindungsgemäß dadurch aus, dass die Transporteinrichtung derart ausgebildet ist, dass die Bodenebene der Leergutkästen bei der Kontrolle gegenüber einer horizontalen Ebene geneigt ist, so dass abfließende Verschmutzungen und/oder eine Reinigungsflüssigkeit seitlich an der Lichtaustrittsfläche der Beleuchtungseinrichtung oder der Kamera vorbeilaufen.

Dadurch, dass die Bodenebene der Leergutkästen durch die Transporteinrichtung geneigt ist, fließen die Verschmutzung bzw. die Reinigungsflüssigkeit entlang der geneigten Bodenebene bzw. der Fächerwände ab. Folglich tropfen dann die Verschmutzungen bzw. die Reinigungsflüssigkeit über eine Kante der Bodenebene oder über eine Seitenwand des zu kontrollierenden Leergutkastens nach unten ab. Da jedoch die Beleuchtungseinrichtung bzw. die Kamera durch die Neigung gegenüber der Abtropfstelle seitlich angeordnet sind, laufen die Verschmutzung und/oder die Reinigungsflüssigkeit seitlich an der Lichtaustrittsfläche der Beleuchtungseinrichtung bzw. der Kamera vorbei.

Folglich wird also weder die Lichtaustrittsfläche der Beleuchtungseinrichtung noch die Kamera durch die herablaufenden Verschmutzungen bzw. die Reinigungsflüssigkeit getroffen und müssen so erheblich seltener gereinigt werden. Dadurch ist die Inspektionsvorrichtung im Betrieb erheblich kostengünstiger.

Die Inspektionsvorrichtung kann in einer Leergut- und/oder Getränkeverarbeitungsanlage angeordnet sein, die vorzugsweise dazu ausgebildet ist, die Leergutkästen und die darin enthaltenen Flaschen zu reinigen und/oder wieder zu befüllen. Denkbar ist auch, dass es sich um eine Anlage zur Herstellung der Leergutkästen und/oder Flaschen handelt. Der Inspektionsvorrichtung kann einer Waschstation zur Reinigung der Leergutkästen vorgeordnet sein. Denkbar ist auch, dass die Inspektionsvorrichtung der Waschstation nachgeordnet ist, um schadhafte Leergutkästen vor der Reinigung auszusortieren.

Die Leergutkästen können dazu ausgebildet sein, mehrere Flaschen mit von den Fächerwänden und der Bodenebene gebildeten Fächern aufzunehmen. Beispielsweise können die Leergutkästen ein Raster aus 3 x 4 oder 4 x 5 Fächern zur Aufnahme der Flaschen aufweisen. Denkbar ist ein rechteckiges oder hexagonales Raster der Fächer.

Die Flaschen können dazu vorgesehen sein, Getränke, Hygieneartikel, Pasten, chemische und/oder biologische und/oder pharmazeutische Produkte aufzunehmen. Die Flaschen können Kunststoff- oder Glasflaschen sein. Bei den Kunststoffflaschen kann es sich im speziellen um PET-, PEN-, HD-PE- oder PP-Flaschen handeln. Ebenso kann es sich um biologisch abbaubare Flaschen handeln, deren Hauptbestandteile aus nachwachsenden Rohstoffen wie z. B. Zuckerrohr, Weizen oder Mais bestehen.

Bei den Verschmutzungen kann es sich beispielsweise um Glassplitter, Steine, Sand oder dergleichen handeln. Bei der Reinigungsflüssigkeit kann es sich beispielsweise um Wasser, eine Lauge, Seife oder dergleichen handeln.

Die Kamera kann als Zeilen- oder Matrixkamera ausgebildet sein. Darüber hinaus kann die Kamera einen CCD- oder CMOS-Sensor und/oder ein Objektiv umfassen, um Kamerabilder von den Leergutkästen aufzunehmen. Die Kamera kann mit der Transporteinrichtung synchronisiert sein, beispielsweis über ein Triggersignal von einem Positionssensor der Transporteinrichtung. Beispielsweise können beim Einsatz einer Zeilenkamera die Bildzeilen synchronisiert mit der Fortbewegung der Transporteinrichtung aufgenommen werden und darüber zu einem Matrixbild zusammengesetzt werden. Die Zeilenkamera kann dabei mit ihrer Bildzeile quer zur Transportrichtung der Transporteinrichtung ausgerichtet angeordnet sein. Ebenso ist denkbar, dass beim Einsatz einer Matrixkamera die Aufnahme der Kamerabilder durch einen Sensor zur Erkennung der Leergutkästen auf der Transporteinrichtung getriggert wird, beispielweise durch eine Lichtschranke.

Die Kamera kann mit einer Bildverarbeitungseinrichtung verbunden sein, um die von der Kamera aufgenommenen Kamerabilder zur Kontrolle der Leergutkästen zu analysieren. Beispielsweise kann die Bildverarbeitungseinrichtung dazu ausgebildet sein, die Kamerabilder der Kamera hinsichtlich Schäden und Verschmutzungen in den Leergutkästen zu analysieren. Die Bildverarbeitungseinrichtung kann in einer Maschinensteuerung für die Inspektionsvorrichtung integriert oder separat davon ausgebildet sein.

Die Beleuchtungseinrichtung kann eine Lichtquelle, wie beispielsweise eine oder mehrere LEDs, Glühbirnen und/oder Leuchstoffröhren umfassen. Darüber hinaus kann die Beleuchtungseinrichtung als Lichtaustrittsfläche eine Streuscheibe umfassen, um eine flächig oder zeilenförmige Lichtaustrittsfläche bereitzustellen. Darüber hinaus kann die Beleuchtungseinrichtung Reflektoren, Linsen und dergleichen umfassen, so dass das Licht von der Lichtquelle zur Lichtaustrittsfläche geführt wird. Ferner kann die Beleuchtungseinrichtung ein Gehäuse umfassen, in dem die Lichtquelle, die optischen Komponenten und/oder die Lichtaustrittsfläche eingehaust sind.

Die Transporteinrichtung kann wenigstens ein Förderband umfassen, auf dem die Leergutkästen transportiert werden. Zwei Förderbänder können derart aneinander anschließen, dass dazwischen ein Schlitz ausgebildet ist, um die Leergutkästen durch eine Transportebene der Transporteinrichtung hindurch mit der Beleuchtungseinrichtung zu beleuchten oder mit der Kamera zu erfassen. Denkbar ist auch, dass die Transporteinrichtung ein Schienensystem, Vorschubbänder, Rollen und/oder Greifer zum Transport der Leergutkästen umfasst. Denkbar ist auch, dass die Transporteinrichtung als Karussell ausgebildet ist.

Die optische Achse der Kamera kann die optische Achse eines Objektivs der Kamera sein. Alternativ oder zusätzlich kann die optische Achse senkrecht zum und durch den Mittelpunkt des Bildsensors der Kamera verlaufen (des CCD- oder CMOS-Sensors). Zusätzlich kann die optische Achse der Kamera einer Blickrichtung der Kamera entsprechen.

Dass die "optische Achse der Kamera bei der Kontrolle auf die Bodenebene des zu kontrollierenden Leergutkastens ... ausgerichtet ist" kann hier bedeuten, dass die Kamera von unten oder von oben auf den Leergutkasten ausgerichtet ist. Von oben kann die Befüllrichtung für die Flaschen in und aus dem Leergutkasten heraus sein. Dass die "optische Achse der Kamera ... auf eine Lichtaustrittsfläche der Beleuchtungseinrichtung ausgerichtet ist" kann hier bedeuten, dass die optische Achse senkrecht auf die Lichtaustrittsfläche ausgerichtet ist. Ebenso kann dies bedeuten, dass die Kamera die Lichtaustrittsfläche der Beleuchtungseinrichtung flächig erfasst. Beispielsweise können sequentiell entlang der optischen Achse der Kamera das Objektiv, die Bodenebene des Leergutkastens und dann die Lichtaustrittsfläche der Beleuchtungseinrichtung angeordnet sein. Folglich kann der Leergutkasten mit Blickrichtung auf die Bodenebene im Durchlicht erfasst werden.

Die horizontale Ebene kann die Ebene sein, die senkrecht auf einer vertikalen Richtung steht. Die vertikale Richtung kann die Richtung sein, die auf den Erdmittelpunkt gerichtet ist. Ebenso kann die horizontale Ebene eine Ebene sein, die parallel zu einem Boden der Leergut- und/oder Getränkeverarbeitungsanlage verläuft. Dass die "Bodenebene der Leergutkästen bei der Kontrolle gegenüber einer horizontalen Ebene geneigt ist" kann hier bedeuten, dass beide Ebenen sich in einer Gerade schneiden und einen Winkel zueinander bilden, der ungleich 0° ist oder in einem Bereich von 30° - 150° liegt. Damit die abfließende Verschmutzung und/oder die Reinigungsflüssigkeit seitlich an der Lichtaustrittsfläche der Beleuchtungseinrichtung oder der Kamera vorbei läuft, kann die Transporteinrichtung derart gegenüber der Kamera bzw. der Lichtaustrittsfläche ausgerichtet sein, dass ein tiefster Punkt oder eine tiefste Fläche des zu kontrollierenden Leergutkastens bei der Kontrolle vertikal seitlich von der Lichtaustrittsfläche bzw. der Kamera angeordnet ist.

Die Bodenebene kann bei der Kontrolle in einem Bereich von 30° - 150° gegenüber der horizontalen Ebene geneigt sein, vorzugsweise in einem Bereich von 60° - 120°, weiterhin vorzugsweise um 90°. Dadurch fließen die Verschmutzungen bzw. die Reinigungsflüssigkeit möglichst quer zur optischen Achse der Kamera ab, ohne die Lichtaustrittsfläche bzw. die Kamera zu treffen.

Die Transporteinrichtung kann mit einem gegenüber der horizontalen Ebene ansteigenden oder abfallenden Transportsegment ausgebildet sein, durch das die Leergutkästen geneigt werden und wobei die Kamera und die Beleuchtungseinrichtung an dem ansteigenden oder abfallenden Transportsegment angeordnet sind. Vorzugsweise kann das Transportsegment in Transportrichtung ansteigen bzw. abfallen. Dadurch ist die Transporteinrichtung besonders einfach und damit kostengünstig aufgebaut. Beispielsweise kann das ansteigende oder abfallende Transportsegment zwei Förderbänder mit einem Schlitz dazwischen umfassen, durch den hindurch die Leergutkästen mit der Kamera und der Beleuchtungseinrichtung kontrolliert werden.

Die Transporteinrichtung kann mit einer Dreheinheit ausgebildet sein, mit der die Leergutkästen geneigt werden. Denkbar ist, dass die Dreheinheit dazu ausgebildet ist, die Leergutkästen längs und/oder quer zur Transportrichtung der Transporteinrichtung zu neigen. Beispielsweise können die Leergutkästen nach einer Waschstation mit der Bodenebene nach oben auf einem Förderband angeordnet sein. Mit der Dreheinheit können die Leergutkästen beispielsweise um 90° gegenüber der Transportrichtung gedreht werden, so dass sie anschließend auf der Seite liegend auf einem weiteren Förderband transportiert werden können. Dadurch können die Kamera und die Beleuchtungseinrichtung besonders einfach jeweils auf einer Seite des weiteren Förderbands angeordnet werden, so dass die optische Achse der Kamera im Wesentlichen horizontal verläuft.

Die Dreheinheit kann mit einer spiralförmigen Transportbahn ausgebildet sein, in der die Leergutkästen um eine Transportrichtung gedreht werden. Dadurch ist die Dreheinheit besonders einfach und damit kostengünstig aufgebaut.

Die Kamera und die Beleuchtungseinrichtung können der Dreheinheit in Transportrichtung nachgeordnet sein. Dadurch dreht sich der zu kontrollierende Leergutkasten bei der Kontrolle selbst nicht mehr und kann so mit gleichbleibender Kameraperspektive zuverlässig inspiziert werden.

Eine weitere Dreheinheit kann der Kamera und der Beleuchtungseinrichtung in Transportrichtung nachgeordnet sein, um die Leergutkästen nach der Kontrolle derart zu drehen, dass die Bodenebenen wieder parallel zur horizontalen Ebene verlaufen. Dadurch können die Leergutkästen nach der Kontrolle wieder in eine Position gedreht werden, so dass sie besonders einfach mit Flaschen von oben befüllt werden können. Die Leergutkästen können also nach der weiteren Dreheinheit mit ihrem Boden auf einem Transportband direkt aufliegen.

Die Dreheinheit kann mit einer U-förmigen Transporteinheit ausgebildet sein, so dass die Leergutkästen beim Transport gewendet werden und die Kamera und die Beleuchtungseinrichtung im Bereich der U-förmigen Transportbahn angeordnet sind. Dadurch können die in der Waschstation vorzugsweise mit der Bodenebene nach oben ausgerichteten Leergutkästen durch die Inspektionsvorrichtung sowohl kontrolliert als auch für weitere Verarbeitungsschritte gewendet werden. Dadurch ist die Inspektionsvorrichtung besonders kompakt aufgebaut. Beispielsweise kann die Dreheinheit im Anschluss an eine Waschstation angeordnet sein, bei der die Leergutkästen mit der Bodenebene nach oben gereinigt werden. Die U-förmige Transportbahn kann nach oben oder nach unten hin verlaufen, so dass die Leergutkästen in einem mittleren Segment der Transportbahn mit ihren Bodenebenen in vertikaler Richtung ausgerichtet sind. In diesem Bereich kann dann die Kontrolle durch die Kamera und die Beleuchtungseinrichtung besonders einfach erfolgen, ohne dass Verschmutzungen oder Reinigungsmittel zur Lichtaustrittsfläche oder der Kamera gelangen.

Die Beleuchtungseinrichtung kann mit einem Schutzschild ausgebildet sein, um die Lichtaustrittsfläche vor abfließenden Verschmutzungen und/oder einer Reinigungsflüssigkeit zu schützen. Hierdurch ist die Lichtaustrittsfläche noch besser geschützt und muss so besonders selten gereinigt werden. Darüber hinaus kann zusätzlich oder alternativ die Kamera mit einem Schutzschild ausgebildet sein, um die Kamera vor abfließenden Verschmutzungen und/oder einer Reinigungsflüssigkeit zu schützen. Hierdurch wird die Kamera noch besser geschützt und muss so besonders selten gereinigt werden.

Das folgende Inspektionsverfahren zur optischen Kontrolle von Leergutkästen kann mit der Inspektionsvorrichtung, insbesondere nach einem der Ansprüche 1 - 10, durchgeführt werden: Die Leergutkästen werden mit wenigstens einer Kamera und einer Beleuchtungseinrichtung kontrolliert, wobei die Kamera bei der Kontrolle mit ihrer optischen Achse auf die Bodenebene des zu kontrollierenden Leergutkastens und auf eine Lichtaustrittsfläche der Beleuchtungseinrichtung ausgerichtet ist, wobei die Leergutkästen mit einer Transporteinrichtung zwischen der Beleuchtungseinrichtung und der Kamera transportiert werden, und wobei die Bodenebene der Leergutkästen bei der Kontrolle gegenüber einer horizontalen Ebene derart geneigt wird, dass abfließende Verschmutzungen und/oder eine Reinigungsflüssigkeit seitlich an der Lichtaustrittsfläche der Beleuchtungseinrichtung oder der Kamera vorbeilaufen.

Dadurch, dass die Bodenebene der Leergutkästen bei der Kontrolle gegenüber der horizontalen Ebene geneigt wird, laufen die abfließenden Verschmutzungen und/oder die Reinigungsflüssigkeit seitlich an der Lichtaustrittsfläche der Beleuchtungseinrichtung oder der Kamera vorbei. Folglich gelangen keine Verschmutzungen und/oder die Reinigungsflüssigkeit auf die Lichtaustrittsfläche bzw. auf die Kamera, so dass diese besonders wenig verschmutzen. Folglich muss sowohl die Lichtaustrittsfläche als auch die Kamera seltener gereinigt werden, wodurch der Betrieb besonders kostengünstig ist.

Weitere Merkmale und Vorteile der Erfindung werden nachfolgend anhand der in den Figuren dargestellten Ausführungsbeispiele näher erläutert. Dabei zeigt:
- Fig. 1: ein Ausführungsbeispiel einer Inspektionsvorrichtung zur optischen Kontrolle von Leergutkästen mit einem abfallenden Transportsegment in einer seitlichen Ansicht;
- Fig. 2: ein weiteres Ausführungsbeispiel der Inspektionsvorrichtung mit einer Dreheinheit zur Neigung der Leergutkästen in einer Draufsicht; und
- Fig. 3: ein weiteres Ausführungsbeispiel einer Inspektionsvorrichtung mit einer Dreheinheit mit einer U-förmigen Transportbahn in einer seitlichen Ansicht.

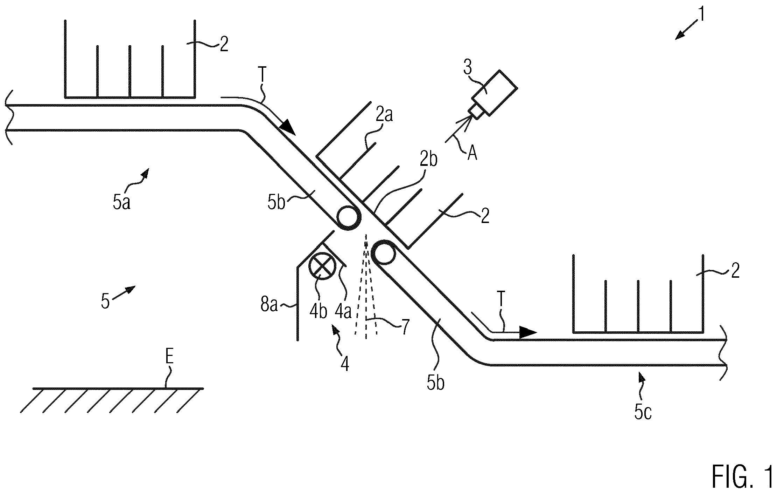

In der Fig. 1 ist ein Ausführungsbeispiel einer Inspektionsvorrichtung 1 zur optischen Kontrolle der Leergutkästen 2 mit einem abfallenden Transportsegment 5b in einer seitlichen Ansicht gezeigt. Beispielsweise kann vor der in der Fig. 1 dargestellten Inspektionsvorrichtung eine Waschstation angeordnet sein, um die Leergutkästen 2 zu reinigen.

Die Leergutkästen 2 sind mit von einer Bodenebene 2b ausgehenden Fächerwänden 2a zur Aufnahme von Flaschen ausgebildet. Die Fächerwände 2a bilden hier eine regelmäßige Anordnung von Fächern, in die jeweils eine Flasche eingestellt werden kann.

Zu sehen ist, dass die Leergutkästen 2 entlang der Transportrichtung T mit der Transporteinrichtung 5 transportiert werden. Zunächst sind die Leergutkästen 2 mit der Bodenebene 2b auf das im Wesentlichen horizontal verlaufende Transportsegment 5a aufgestellt. Dadurch, dass das nachfolgende Transportsegment 5b gegenüber der horizontalen Ebene E geneigt ist, werden die Leergutkästen 2 schräg nach unten transportiert, so dass die Verschmutzungen und die Reinigungsflüssigkeit 7 vertikal nach unten in Richtung der Schwerkraft aublaufen. Nach der Kontrolle werden die Leergutkästen 2 wieder zurückgekippt, so dass sie mit der Bodenebene 2b parallel zur horizontalen Ebene E in Transportrichtung T weiter transportiert werden. Denkbar ist auch, dass die Inspektionsvorrichtung alternativ zum abfallenden Transportsegment 5b mit einem ansteigenden Transportsegment ausgebildet ist.

Des Weiteren ist zu sehen, dass im Bereich des abfallenden Transportsegments 5b die Kamera 3 und die Beleuchtungseinrichtung 4 angeordnet sind, wobei die optische Achse A der Kamera 3 bei der Kontrolle auf die Bodenebene 2b des zu kontrollierenden Leergutkastens 2 und auf die Lichtaustrittsfläche 4a der Beleuchtungseinrichtung 4 ausgerichtet ist. Hierdurch wird der Leergutkasten 2 im Durchlicht kontrolliert.

Die Beleuchtungseinrichtung 4 umfasst eine Lichtquelle 4b, beispielsweise ein Array aus Leuchtdioden und eine Lichtaustrittsfläche 4a, die hier beispielsweise als Streuscheibe ausgebildet ist und parallel zur Bodenebene 2b des Leergutkastens 2 verläuft. Denkbar ist jedoch jede andere geeignete Beleuchtungseinheit 4 mit einer flächigen Lichtaustrittsscheibe 4a. Des Weiteren ist das Schutzschild 8a zu sehen, mit der die Lichtaustrittsfläche 4a und die Lichtquelle 4b vor herabtropfenden Flüssigkeiten bzw. Verschmutzungen geschützt werden.

Darüber hinaus ist zu sehen, dass die Kamera 3 beispielsweise als Zeilenkamera ausgebildet ist, wobei die einzelnen aufgenommenen Bildzeilen durch die Transportbewegung T in üblicher Weise zu einem flächenhaften Bild zusammengesetzt werden können. Die Sensorzeile der Kamera 3 ist parallel zum Schlitz im Transportsegment 5b ausgerichtet, so dass eine gleichmäßige Hinterleuchtung des Leergutkastens 2 entlang der Sensorzeile gewährleistet ist. Genauso denkbar ist auch eine Matrixkamera.

Wie in der Fig. 1 zu erkennen ist, tropfen die Verschmutzungen bzw. die Reinigungsflüssigkeit 7 durch den Schlitz des abfallenden Transportsegments 5b vertikal hindurch nach unten. Dadurch, dass die Lichtaustrittsfläche 4a seitlich von diesem Bereich angeordnet ist, erfolgt das Abtropfen nicht auf die Beleuchtungseinrichtung 4, wodurch diese seltener gereinigt werden muss. Dadurch ist der Betrieb der Inspektionsvorrichtung 1 besonders kostengünstig.

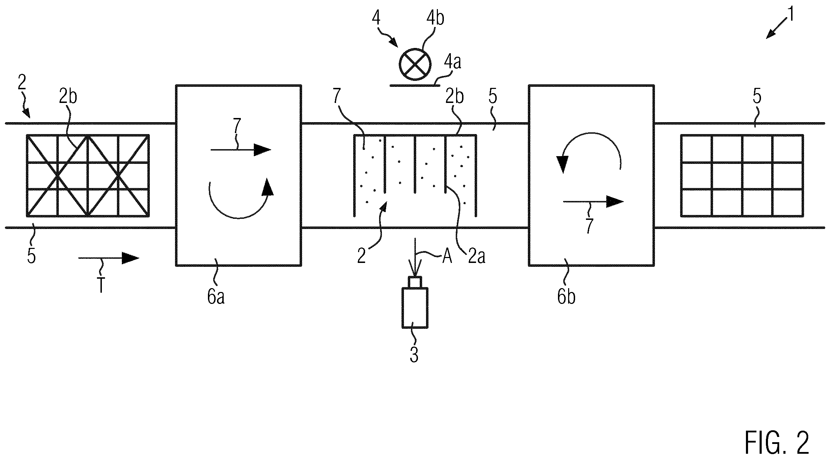

In der Fig. 2 ist ein weiteres Ausführungsbeispiel der Inspektionsvorrichtung 1 zur optischen Kontrolle der Leergutkästen 2 in einer Draufsicht dargestellt. Zu sehen ist, dass die Inspektionsvorrichtung 1 eine Transporteinrichtung 5 zum Transport und zwei Dreheinheiten 6a, 6b zum Drehen der Leergutkästen 2 umfasst.

Die Transporteinrichtung 5 ist hier beispielsweise als Förderband ausgebildet. Die Leergutkästen 2 werden darauf in der Transportrichtung T in der Fig. 2 von links nach rechts transportiert. Zunächst werden die Leergutkästen 2 mit ihrer Bodenebene 2b obenliegend transportiert, beispielsweise aus einer Waschstation heraus. Mit der ersten Dreheinheit 6a werden die Leergutkästen 2 um die Transportrichtung T mit 90° gedreht, so dass diese nachfolgend im mittleren Bereich auf der Seite liegend transportiert werden. Dabei können die Leergutkästen 2 durch die seitlich der Transporteinrichtung 5 angeordnete Kamera 3 und die Beleuchtungseinrichtung 4 im Durchlicht kontrolliert werden. Die Beleuchtungseinrichtung 4 ist hier, ähnlich wie im vorangegangenen Ausführungsbeispiel der Fig. 1 mit einem Leuchtdiodenarray 4b und einer Streuscheibe 4a ausgebildet. Denkbar ist auch hier jede andere geeignete Beleuchtungseinheit 4 mit einer flächigen Lichtaustrittsscheibe 4a.

Zu sehen ist, dass die Verschmutzungen bzw. die Reinigungsflüssigkeit 7 auf das Förderband der Transporteinrichtung 5 abtropfen und sich durch die seitliche Anordnung nicht auf der Lichtaustrittsscheibe 4a der Beleuchtungseinrichtung 4 oder der Kamera 3 ablagern können.

Ferner ist die zweite Dreheinheit 6b zu sehen, die der Kamera 3 sowie der Beleuchtungseinheit 4 nachgeordnet ist. Hiermit werden die Leergutkästen 2 nach der Kontrolle erneut um 90° gedreht, so dass diese mit ihren Fächeröffnungen nach oben hin auf der Transporteinrichtung 5 stehen. Dadurch können diese in nachfolgenden Behandlungsschritten besonders einfach mit Flaschen befüllt werden.

Hier nicht genauer im Detail dargestellt, sind die beiden Dreheinheiten 6a und 6b mit einer spiralförmigen Transportbahn, beispielsweise mit mehreren spiralförmigen Schienen ausgebildet, um die Leergutkästen jeweils um 90° gegenüber der Transportrichtung T zu drehen. Dadurch sind die Dreheinheiten 6a und 6b besonders einfach aufgebaut.

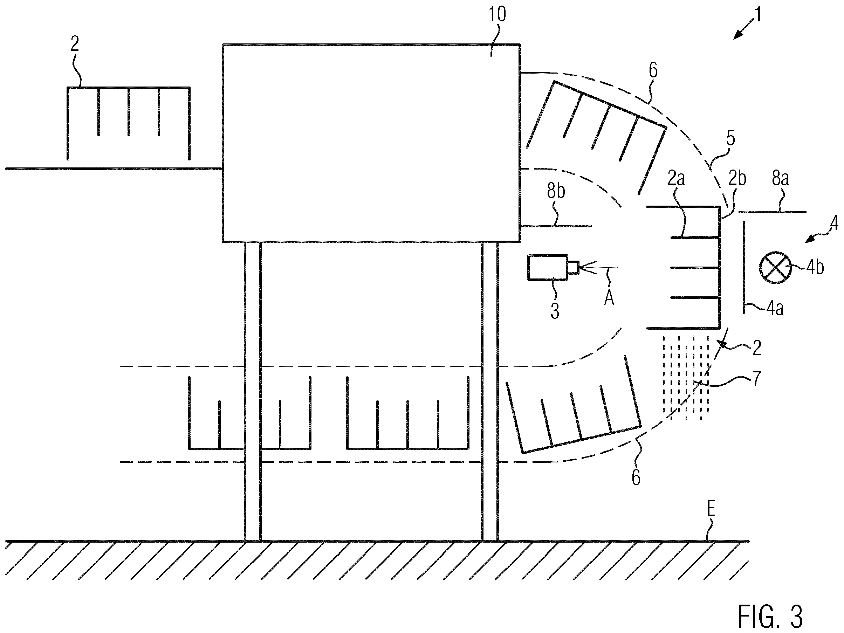

In der Fig. 3 ist ein weiteres Ausführungsbeispiel der Inspektionsvorrichtung 1 in einer seitlichen Ansicht dargestellt. Zu sehen ist, dass die Inspektionsvorrichtung 1 einer Waschstation 10 zum Reinigen der Leergutkästen 2 nachgeordnet ist. In der Waschstation 10 werden die Leergutkästen 2 auf dem Kopf stehend gereinigt. Anschließend ist die Inspektionsvorrichtung 1 angeordnet, die eine Dreheinheit 6 mit einer U-förmigen Transportbahn umfasst. Hierdurch werden die Leergutkästen 2 beim Transport gewendet, so dass diese unterhalb der Waschstation 10 wieder mit der Bodenebene 2b nach unten weitertransportiert werden.

Zu sehen ist weiter, dass die Leergutkästen 2 im Bereich der U-förmigen Transportbahn so transportiert werden, dass die Bodenebene 2b des zu kontrollierenden Leergutkastens 2 in etwa vertikal verläuft, also gegenüber der horizontalen Ebene E um 90° geneigt ist.

In diesem Bereich der U-förmigen Transportbahn sind die Kamera 3 und die Beleuchtungseinrichtung 4 angeordnet, um den Leergutkasten 2 zu durchleuchten. Die optische Achse A der Kamera 3 ist hier im Wesentlichen horizontal angeordnet und auf die Bodenebene 2b und die Lichtaustrittsfläche 4a ausgerichtet.

Die abfließenden Verschmutzungen und die Reinigungsflüssigkeit 7 tropfen so vertikal nach unten ab und erreichen die demgegenüber horizontal angeordnete Kamera 3 bzw. die Beleuchtungseinrichtung 4 nicht. Folglich müssen die Kamera 3 und die Lichtaustrittsscheibe 4a der Beleuchtungseinrichtung 4 seltener gereinigt werden.

Des Weiteren ist zu sehen, dass die Beleuchtungseinrichtung 4 bzw. deren Lichtaustrittsscheibe 4a durch den Schutzschild 8a geschützt wird, so dass von oben herunterspritzende Verschmutzungen bzw. die Reinigungsflüssigkeit die Lichtaustrittsscheibe 4a nicht erreichen können. Ebenso ist auch die Kamera 3 mit dem Schutzschild 8b geschützt, so dass die von dem oberhalb dargestellten Leergutkasten abfließenden Verschmutzungen bzw. die Reinigungsflüssigkeit die Kamera 3 nicht erreichen können.

Insgesamt sind bei der Inspektionseinrichtung 1 die Kamera 3 und die Lichtaustrittsscheibe 4a der Beleuchtungseinrichtung 4 besonders gut vor abfließenden Verschmutzungen und/oder der Reinigungsflüssigkeit 7 geschützt. Folglich muss die Inspektionsvorrichtung 1 besonders selten gereinigt werden und ist damit kostengünstiger einsetzbar.

Die in den Fig. 1-3 dargestellten Inspektionsvorrichtungen 1 werden wie folgt eingesetzt:
Die Leergutkästen 2 werden mit der Kamera 3 und der Beleuchtungseinrichtung 4 kontrolliert, wobei die Kamera 3 bei der Kontrolle mit ihrer optischen Achse A auf die Bodenebene 2b des zu kontrollierenden Leergutkastens 2 und auf die Lichtaustrittsfläche 4a der Beleuchtungseinrichtung 4 ausgerichtet ist. Dabei werden die Leergutkästen 2 mit der Transporteinrichtung 5 zwischen der Beleuchtungseinrichtung 4 und der Kamera 3 transportiert.

Des Weiteren werden die Bodenebenen 2b der Leergutkästen 2 bei der Kontrolle gegenüber einer horizontalen Ebene E geneigt, so dass abfließende Verschmutzungen und/oder die Reinigungsflüssigkeit 7 seitlich an der Lichtaustrittsfläche 4a der Beleuchtungseinrichtung 4 oder der Kamera 3 vorbeilaufen. Hierdurch lagern sich die Verschmutzungen bzw. die Reinigungsflüssigkeit nicht auf der Kamera 3 bzw. auf der Lichtaustrittsfläche 4a ab und diese müssen dadurch seltener gereinigt werden. Dadurch ist das mit den Inspektionsvorrichtungen durchgeführte Inspektionsverfahren besonders kostengünstig.

Es versteht sich, dass in den zuvor beschriebenen Ausführungsbeispielen genannte Merkmale nicht auf die speziellen Kombinationen beschränkt sind und in beliebigen anderen Kombinationen möglich sind.

## Patentansprüche

1. Inspektionsvorrichtung (1) zur optischen Kontrolle von Leergutkästen (2) mit von einer Bodenebene (2b) ausgehenden Fächerwänden (2a) zur Aufnahme von Flaschen, wobei die Inspektionsvorrichtung (1) wenigstens eine Kamera (3) und eine Beleuchtungseinrichtung (4) zur Kontrolle der Leergutkästen (2) im Durchlicht und eine Transporteinrichtung (5) zum Transport der Leergutkästen (2) zwischen der Beleuchtungseinrichtung (4) und der Kamera (3) umfasst, und wobei eine optische Achse (A) der Kamera (3) bei der Kontrolle auf die Bodenebene (2b) des zu kontrollierenden Leergutkastens (2) und auf eine Lichtaustrittsfläche (4a) der Beleuchtungseinrichtung (4) ausgerichtet ist,
**dadurch gekennzeichnet, dass**
die Transporteinrichtung (5) derart ausgebildet ist, dass die Bodenebene (2b) der Leergutkästen (2) bei der Kontrolle gegenüber einer horizontalen Ebene (E) geneigt ist, so dass abfließende Verschmutzungen und/oder eine Reinigungsflüssigkeit (7) seitlich an der Lichtaustrittsfläche (4a) der Beleuchtungseinrichtung (4) oder der Kamera (3) vorbeilaufen.

2. Inspektionsvorrichtung (1) nach Anspruch 1, wobei die Bodenebene (2b) bei der Kontrolle in einem Bereich von 30° - 150° gegenüber der horizontalen Ebene (E) geneigt ist, vorzugsweise in einem Bereich von 60° - 120°, weiterhin vorzugsweise um 90°.

3. Inspektionsvorrichtung (1) nach Anspruch 1 oder 2, wobei die Transporteinrichtung (5) mit einem gegenüber der horizontalen Ebene (E) ansteigenden oder abfallenden Transportsegment (5b) ausgebildet ist, durch das die Leergutkästen (2) geneigt werden und wobei die Kamera (3) und die Beleuchtungseinrichtung (4) an dem ansteigenden oder abfallenden Transportsegment (5b) angeordnet sind.

4. Inspektionsvorrichtung (1) nach Anspruch 1 oder 2, wobei die Transporteinrichtung (5) mit einer Dreheinheit (6, 6a, 6b) ausgebildet ist, mit der die Leergutkästen (2) geneigt werden.

5. Inspektionsvorrichtung (1) nach Anspruch 3, wobei die Dreheinheit (6a) mit einer spiralförmigen Transportbahn ausgebildet ist, in der die Leergutkästen (2) um eine Transportrichtung (T) gedreht werden.

6. Inspektionsvorrichtung (1) nach Anspruch 4 oder 5, wobei die Kamera (3) und die Beleuchtungseinrichtung (4) der Dreheinheit (6a) in Transportrichtung (T) nachgeordnet sind.

7. Inspektionsvorrichtung (1) nach Anspruch 6, wobei eine weitere Dreheinheit (6b) der Kamera (3) und der Beleuchtungseinrichtung (4) in Transportrichtung (T) nachgeordnet ist, um die Leergutkästen (2) nach der Kontrolle derart zu drehen, dass die Bodenebenen (2b) wieder parallel zur horizontalen Ebene (E) verlaufen.

8. Inspektionsvorrichtung (1) nach Anspruch 4, wobei die Dreheinheit (6) mit einer U-förmig Transportbahn ausgebildet ist, so dass die Leergutkästen (2) beim Transport gewendet werden und wobei die Kamera (3) und die Beleuchtungseinrichtung (4) im Bereich der U-förmigen Transportbahn angeordnet sind.

9. Inspektionsvorrichtung (1) nach einem der vorangegangenen Ansprüche, wobei die Beleuchtungseinrichtung (4) mit einem Schutzschild (8a) ausgebildet ist, um die Lichtaustrittsfläche (4a) vor abfließenden Verschmutzungen und/oder einer Reinigungsflüssigkeit (7) zu schützen.

10. Inspektionsvorrichtung (1) nach einem der vorangegangenen Ansprüche, wobei die Kamera (3) mit einem Schutzschild (8b) ausgebildet ist, um die Kamera (3) vor abfließenden Verschmutzungen und/oder einer Reinigungsflüssigkeit (7) zu schützen.

## Claims

1. Inspection apparatus (1) for the optical control of crates (2) with fan walls (2a) extending from a bottom plane (2b) for accommodating bottles, wherein the inspection apparatus (1) comprises at least a camera (3) and an illumination device (4) for controlling the crates (2) in transmitted light, and a transport device (5) for transporting the crates (2) between the illumination device (4) and the camera (3), and wherein an optical axis (A) of the camera (3) is oriented during control relative to the bottom plane (2b) of the crate (2) to be controlled and to a light exit surface (4a) of the illumination device (4),
**characterized in that**
the transport device (5) is designed such that the bottom plane (2b) of the crates (2) is inclined during control relative to a horizontal plane (E), so that outflowing dirt and/or a cleaning liquid (7) run laterally past the light exit surface (4a) of the illumination device (4) or the camera (3).

2. Inspection apparatus (1) according to claim 1, wherein the bottom plane (2b) is inclined during control in a range of 30° - 150° relative to the horizontal plane (E), preferably in a range of 60° - 120°, further preferably about 90°.

3. Inspection apparatus (1) according to claim 1 or 2, wherein the transport device (5) is designed with a transport segment (5b) rising or falling relative to the horizontal plane (E), by which the crates (2) are inclined, and wherein the camera (3) and the illumination device (4) are arranged on the rising or falling transport segment (5b).

4. Inspection apparatus (1) according to claim 1 or 2, wherein the transport device (5) is designed with a rotary unit (6, 6a, 6b) with which the crates (2) are inclined.

5. Inspection apparatus (1) according to claim 3, wherein the rotary unit (6a) is designed with a spiral transport path on which the crates (2) are rotated around a transport direction (T).

6. Inspection apparatus (1) according to claim 4 or 5, wherein the camera (3) and the illumination device (4) of the rotary unit (6a) are arranged downstream in transport direction (T).

7. Inspection apparatus (1) according to claim 6, wherein a further rotary unit (6b) of the camera (3) and the illumination device (4) are arranged downstream in transport direction (T) to rotate the crates (2) after control such that the bottom planes (2b) run again in parallel with the horizontal plane (E).

8. Inspection apparatus (1) according to claim 4, wherein the rotary unit (6) is designed with a U-shaped transport path, so that the crates (2) are turned during transport, and wherein the camera (3) and the illumination device (4) are arranged in the region of the U-shaped transport path.

9. Inspection apparatus (1) according to one of the preceding claims, wherein the illumination device (4) is designed with a protective shield (8a) in order to protect the light exit surface (4a) from outflowing dirt and/or a cleaning liquid (7).

10. Inspection apparatus (1) according to one of the preceding claims, wherein the camera (3) is designed with a protective shield (8b) to protect the camera (3) from outflowing dirt and/or a cleaning liquid (7).

## Revendications

1. Installation d'inspection (1) pour le contrôle optique de caisses à bouteilles consignées (2), qui présentent des parois de casier (2a) issues d'un plan de fond (2b) en vue d'accueillir des bouteilles, installation d'inspection (1)
dans laquelle est prévue au moins une caméra (3) et un dispositif d'éclairage (4) pour le contrôle des caisses à bouteilles consignées (2) en lumière transmise, et un dispositif de transport (5) pour le transport des caisses à bouteilles consignées (2) entre le dispositif d'éclairage (4) et la caméra (3), et
dans laquelle un axe optique (A) de la caméra (3) est orienté, lors du contrôle, vers le plan de fond (2b) de la caisse à bouteilles consignées (2) à contrôler, et vers une surface de sortie de lumière (4a) du dispositif d'éclairage (4),
**caractérisée en ce que** le dispositif de transport (5) est configuré de manière à ce que le plan de fond (2b) des caisses de bouteilles consignées (2) soit incliné par rapport à un plan horizontal (E), lors du contrôle, de sorte que des salissures et/ou du liquide de nettoyage (7), qui s'évacuent en s'écoulant, s'écoulent latéralement à côté de la surface de sortie de lumière (4a) du dispositif d'éclairage (4) ou de la caméra (3).

2. Installation d'inspection (1) selon la revendication 1, dans laquelle, lors du contrôle, le plan de fond (2b) est incliné par rapport au plan horizontal (E) dans une plage de 30° - 150°, de préférence dans une plage de 60° - 120°, et par ailleurs de manière préférée de 90°.

3. Installation d'inspection (1) selon la revendication 1 ou la revendication 2, dans laquelle le dispositif de transport (5) est conçu de façon à comporter un segment de transport (5b) ascendant ou descendant par rapport au plan horizontal (E), qui produit l'inclinaison des caisses à bouteilles consignées (2), et dans laquelle la caméra (3) et le dispositif d'éclairage (4) sont agencés au niveau du segment de transport ascendant ou descendant (5b).

4. Installation d'inspection (1) selon la revendication 1 ou la revendication 2, dans laquelle le dispositif de transport (5) est conçu de façon à comporter une unité de rotation (6, 6a, 6b), qui produit une inclinaison des caisses à bouteilles consignées (2).

5. Installation d'inspection (1) selon la revendication 3, dans laquelle l'unité de rotation (6a) est conçue de manière à comporter une voie de transport en forme de spirale, dans laquelle les caisses à bouteilles consignées (2) sont tournées autour d'une direction de transport (T).

6. Installation d'inspection (1) selon la revendication 4 ou la revendication 5, dans laquelle la caméra (3) et le dispositif d'éclairage (4) sont agencés en aval de l'unité de rotation (6a) en se référant à la direction de transport (T).

7. Installation d'inspection (1) selon la revendication 6, dans laquelle une autre unité de rotation (6b) est agencée en aval de la caméra (3) et du dispositif d'éclairage (4) en se référant à la direction de transport (T), en vue de faire tourner les caisses à bouteilles consignées (2), après le contrôle, de manière telle que les plans de fond (2b) s'étendent à nouveau parallèlement au plan horizontal (E).

8. Installation d'inspection (1) selon la revendication 4, dans laquelle l'unité de rotation (6) est conçue de façon à comporter une voie de transport en forme de U, de manière telle que les caisses à bouteilles consignées (2) soient retournées lors du transport, et dans laquelle la caméra (3) et le dispositif d'éclairage (4) sont agencés dans la zone de la voie de transport en forme de U.

9. Installation d'inspection (1) selon l'une des revendications précédentes, dans laquelle le dispositif d'éclairage (4) est conçu de manière à comporter un bouclier de protection (8a) en vue de protéger la surface de sortie de lumière (4a) à l'encontre de salissures et/ou de liquide de nettoyage (7), qui s'évacuent en s'écoulant.

10. Installation d'inspection (1) selon l'une des revendications précédentes, dans laquelle la caméra (3) est conçue de manière à comporter un bouclier de protection (8b), en vue de protéger la caméra (3) à l'encontre de salissures et/ou de liquide de nettoyage (7), qui s'évacuent en s'écoulant.
